# EUROPÄISCHE PATENTANMELDUNG

(11) **EP 4 390 156 A1**
(43) Veröffentlichungstag der Anmeldung: **26.06.2024**
(21) Anmeldenummer: 22216334.7
(22) Anmeldetag: 23.12.2022
(51) Int. Cl.: F16B 7/06, F24F 13/02, F16L 3/133

(54) **BEFESTIGUNGSVERFAHREN EINES KANALS UND EINE VERTIKALBEFESTIGUNG MIT GEWINDEROHR DAFÜR**

(71) Anmelder: Böllhoff Verbindungstechnik GmbH, 33649 Bielefeld (DE)
(72) Erfinder: DRAHT, Torsten, 33758 Schloss Holte-Stukenbrock (DE); MOEHRING, Jörg, 33106 Paderborn (DE)
(74) Vertreter: HWP Intellectual Property

(57) **Zusammenfassung**

Ein Befestigungsverfahren eines Kanals zur Führung eines Mediums oder von Leitungen mithilfe einer anpassbaren Vertikalbefestigung, die mindestens aufweist: einen Vertikalanker mit einem Befestigungsende und einem Gewindeanschluss, ein Gewinderohr mit einander gegenüberliegend einem ersten und einem zweiten Innengewinde gleicher Gangrichtung angeordnet benachbart zu einer ersten und einer zweiten Rohröffnung, dessen erstes Innengewinde auf den Gewindeanschluss des Vertikalankers passt und dessen erstes und dessen zweites Innengewinde über einen Aufnahmeraum voneinander beabstandet sind, einen Haltebolzen mit einem freien Gewindeende und einem Kopfende, dessen Gewindeende in das zweite Innengewinde des Gewinderohrs passt und dessen Kopfende mit einer Haltekonstruktion des Kanals verbindbar oder verbunden ist, wobei das Befestigungsverfahren die folgenden Schritte aufweist: Befestigen des obersten Vertikalankers mit dem Befestigungsende in einer tragenden Horizontalkonstruktion, insbesondere eine Decken- oder Balkenkonstruktion, Verbinden des Gewindeanschlusses des Vertikalankers mit dem ersten Innengewinde des Gewinderohrs, Einschrauben des freien Gewindeendes des Haltebolzens in das zweite Innengewinde des Gewinderohrs, sodass die Haltekonstruktion des Kanals über das Gewinderohr mit dem Vertikalanker verbunden ist.

## Beschreibung

### 1. Gebiet der Erfindung

Die vorliegende Erfindung betrifft ein Befestigungsverfahren eines Kanals zur Führung eines Mediums oder von Leitungen mithilfe einer anpassbaren Vertikalbefestigung. Zudem betrifft vorliegende Erfindung eine Vertikalbefestigung, die in diesem Zusammenhang verwendeten einseitigen und zweiseitigen Gewinderohre sowie Herstellungsverfahren dafür.

### 2. Hintergrund der Erfindung

Gebäude unterschiedlicher Größe und Funktion sind mit Lüftungssystemen ausgestattet. Diese umfassen unter anderem verzweigte Kanäle, um Luftmassen oder andere Medien im Gebäude zu bewegen bzw. umzuwälzen. Diese Kanäle werden üblicherweise unterhalb der Decke von Räumen oder an horizontal verlaufenden Balkenkonstruktionen oder Decken- und Dachkonstruktionen befestigt.

Heutige Befestigungen derartiger Kanäle an einer Decke erfolgen in der Regel mittels Gewindestangen, die bei größeren Luftkanälen paarweise an ihrem unteren Ende über eine tragende Traverse miteinander verbunden sind. Durch diese Traverse entsteht eine Art U-förmige "Affenschaukel", auf welcher ein Kanal oder ein Kanalsegment aufliegt.

Die Montage dieser Kanalbefestigung ist umständlich. Die Gewindestangen werden am Ort der Installation auf eine passende Länge gekürzt. Das Kürzen beschädigt meist das Gewinde, so dass die Gewindestange nachgearbeitet werden muss. Anschließend erfolgt der Aufbau der "Affenschaukel", wobei Kleinteile, wie Unterlegscheiben, Muttern und Gewindemuffen, verbaut werden, die teils über das wieder hergestellte Gewinde geschraubt werden müssen. Da die Gewindestangen zunächst mit einer Längenreserve abgeschnitten worden sind, müssen die Muttern und Kontermuttern zusätzlich über die Reservelänge manuell auf die Gewindestange aufgespindelt werden.

Nach der Montage eines Kanalabschnitts muss dieser in der Höhe angepasst werden, was ein zeitaufwändiges Entkontern und händisches Verstellen der Muttern und Kontermuttern erfordert. Danach erfolgt nochmals eine Kürzung der Gewindestangen auf die finale Länge.

Das oben beschriebene Befestigungssystem für derartige Kanäle, die für Lüftungssystem und dergleichen verwendet werden, ist im Hinblick auf den notwendigen Zeitaufwand zur Installation aufwendig. Zudem haben die verwendeten Komponenten, im Speziellen die Gewindestangen, den Nachteil, dass sie eine große verwinkelte Oberfläche zur Sammlung von Schmutz, Staub und anderen Verunreinigungen darstellen. Werden die Kanäle jedoch in hygienisch sensiblen Bereichen installiert, dann müssen derart kritische Oberflächenbereiche beständig gereinigt oder vor Verschmutzung geschützt werden. Dies bedeutet zusätzlichen Installations- und/oder Materialaufwand.

Das oben beschriebene Befestigungssystem für Kanäle wird häufig auch zum Befestigen oder Abhängen von Zwischendecken genutzt. Denn die dadurch entstehenden Zwischenräume dienen der Aufnahme derartiger Kanäle, die ästhetisch verdeckt angeordnet sein können. Aber auch die in US 2003/0213199 A1 und in US 4,294,054 beschriebenen Befestigungssysteme nutzen freiliegende Gewindestangen, die eine kontaminationsempfindliche Oberfläche nachteiliger Größe aufweisen. Des Weiteren hat sich als Nachteil bei der Installation der Befestigungssysteme herausgestellt, aufeinanderzulaufende Gewindestangen mit einem Spannschloss zu verbinden. Ein derartiges Spannschloss zeichnet sich durch zwei einander gegenüberliegend angeordnete Mutterngewinde entgegengesetzter Gangrichtung aus, sodass die in den Mutterngewinden angeordneten Gewindestangen durch das Drehen in eine Richtung aufeinander zu bewegt und durch das Drehen in die andere Richtung voneinander weg bewegt werden. Auf diese Weise kann der Abstand zwischen einer aufzuhängenden Konstruktion und des obersten Vertikalankers bzw. einer Deckenbefestigung eingestellt werden. Derartige Spannschlösser sind nur manuell einstellbar, sodass ein entsprechend hoher Zeitaufwand erforderlich ist, solange längere Gewindewege zurückgelegt bzw. verschraubt werden müssen.

Die Aufgabe der vorliegenden Erfindung besteht darin, ein Befestigungsverfahren und ein Befestigungssystem bereitzustellen, mit dem derartige Kanäle wirtschaftlicher installiert werden können.

### 3. Zusammenfassung der Erfindung

Die obige Aufgabe wird gelöst durch ein Befestigungsverfahren eines Kanals zur Führung eines Mediums oder von Leitungen mithilfe einer anpassbaren Vertikalbefestigung gemäß dem unabhängigen Patentanspruch 1, ein zweiseitiges und ein einseitiges Gewinderohr gemäß den unabhängigen Patentansprüchen 6 und 11, einen Satz Gewinderohre gemäß Patentanspruch 17, ein Herstellungsverfahren für das einseitige oder das zweiseitige Gewinderohr gemäß Patentanspruch 18 sowie eine Vertikalbefestigung gemäß dem unabhängigen Patentanspruch 20. Vorteilhafte Ausführungsformen und Weiterentwicklungen ergeben sich aus der nachfolgenden Beschreibung, den Zeichnungen sowie den anhängenden Patentansprüchen.

Das erfindungsgemäße Befestigungsverfahren eines Kanals zur Führung eines Mediums oder von Leitungen nutzt eine anpassbare Vertikalbefestigung. Die Vertikalbefestigung weist mindestens auf: einen Vertikalanker mit einem Befestigungsende und einem Gewindeanschluss, der in vertikaler Richtung betrachtet eine oberste Position der anpassbaren Vertikalbefestigung einnimmt, ein Gewinderohr mit einander gegenüberliegend einem ersten und einem zweiten Innengewinde gleicher Gangrichtung angeordnet benachbart zu einer ersten und einer zweiten Rohröffnung, dessen erstes Innengewinde auf den Gewindeanschluss des Vertikalankers passt und dessen erstes und dessen zweites Innengewinde über einen Aufnahmeraum voneinander beabstandet sind, und einen Haltebolzen mit einem freien Gewindeende und einem Kopfende, dessen Gewindeende in das zweite Innengewinde des Gewinderohrs passt und dessen Kopfende mit einer Haltekonstruktion des Kanals verbindbar oder verbunden ist. Das Befestigungsverfahren weist die folgenden Schritte auf: Befestigen des obersten Vertikalankers mit dem Befestigungsende in einer tragenden Horizontalkonstruktion, insbesondere eine Decken- oder Balkenkonstruktion, Verbinden des Gewindeanschlusses des Vertikalankers mit dem ersten Innengewinde des Gewinderohrs, Einschrauben des freien Gewindeendes des Haltebolzens in das zweite Innengewinde des Gewinderohrs, sodass die Haltekonstruktion des Kanals über das Gewinderohr mit dem Vertikalanker verbunden ist.

Das erfindungsgemäße Befestigungsverfahren ist auf ein vereinfachtes Befestigen von Kanälen unterhalb einer Deckenkonstruktion gerichtet. Derartige Kanäle gehören beispielsweise zu einem Lüftungssystem oder einer Klimaanlage eines Gebäudes oder werden zur Führung von Kabelbündeln oder dergleichen verwendet. Unter einer dafür geeigneten Deckenkonstruktion wird die klassische Decke eines Raumes oder aber auch eine zumindest zum Teil horizontal verlaufende Balken- oder Dachkonstruktion angesehen. Denn diese Decken- oder Balkenkonstruktion stellt einen konstruktiv vertikalen, hoch angeordneten Befestigungspunkt bereit, sodass an dieser Stelle ein Befestigungsanker zum Halten der Kanäle fest angeordnet werden kann.

Da sich von dieser Verankerung in der Deckenkonstruktion oder in einer gleichwertigen Balkenkonstruktion ein unten näher erläutertes Befestigungssystem vertikal abwärts erstreckt und der Anker den vertikal höchsten Punkt in diesem Befestigungssystem bildet, wird das am vertikal höchsten Punkt angeordnete Befestigungselement des Befestigungssystems als Vertikalanker bezeichnet. Als Vertikalanker dient beispielsweise ein in die Decke eingeschossener Schussbolzen mit einem hervor ragenden Gewindeende oder ein in der Deckenkonstruktion befestigter Schwerlastankern mit einem Gewindeende oder eine mit einem Dübelende in der Decke befestigten Gewindestange.

Um die Befestigung des mindestens einen Kanals zu vereinfachen, werden in dem Befestigungssystem verschiedene Gewindeelemente gleicher Gangrichtung miteinander verbunden. Entsprechend weist der Vertikalanker ein Gewindeende mit einer ersten Gangrichtung auf, mit dem ein erstes Ende eines Gewinderohrs mit einem Innengewinde gleicher Gangrichtung verbindbar ist. Zudem weist das Gewinderohr gemäß einer Ausgestaltung vorliegender Erfindung ein zweites Gewindeende auf, dessen Innengewinde ebenfalls die Gangrichtung des ersten Gewindeendes aufweist. In dieses zweite Innengewinde des Gewinderohrs wird ein Haltebolzen eingeschraubt, um eine stützende bzw. tragende Traverse, vorzugsweise ein Querbalken, oder aber eine Rohrschelle zum Tragen eines Kanals zu erhalten.

Um in vertikaler Richtung den Verbund aus Vertikalanker, Gewinderohr und Haltebolzen miteinander zu verbinden, muss somit der Werker lediglich in eine Drehrichtung die miteinander zu verbindenden Elemente drehen. Damit entfällt ein elementspezifisches Auswählen der passenden Drehrichtung, um eine schnelle Installation bzw. einen schnellen Zusammenbau des Befestigungssystems zu erzielen.

Des Weiteren stellt das erfindungsgemäß genutzte Gewinderohr sicher, dass im Gegensatz zu einer sonst üblichen Gewindestange keine kontaminationsanfälligen Oberflächenbereiche eines Gewindes in der Umgehung des Kanals freiliegen und beispielsweise regelmäßig gesäubert werden müssen. Vielmehr sorgt das erfindungsgemäß verwendete Gewinderohr dafür, dass eine vorzugsweise glatte Außenfläche des Gewinderohrs gebildet durch eine Mantelfläche des Gewinderohrs eine Anfälligkeit für Kontamination im Vergleich zu den sonst üblichen Gewindestangen reduziert. Dieser Effekt kann weiter bevorzugt durch eine geeignete Materialwahl des Gewinderohrs, wie beispielsweise Edelstahl oder dergleichen, unterstützt werden.

Das zentral angeordnete Gewinderohr zeichnet sich zudem durch einen Einschraubraum aus, der zwischen den beiden Öffnungen des Gewinderohrs angeordnet ist. Gemäß einer bevorzugten konstruktiven Ausgestaltung des Gewinderohrs ist der Einschraubraum durch die Gewindeelemente frei zugänglich, die durch die erste und die zweite Öffnung des Gewinderohrs mit diesem verbunden werden. Diese freie Einschraubmöglichkeit von Gewindeelementen in das Gewinderohr eröffnet die Möglichkeit, dass eine Länge des Gewinderohrs in Kombination mit eingeschraubten Gewindeelementen oder weiteren Elementen flexibel eingestellt werden kann. Zudem ist für diese Einstellung lediglich das Drehen in der nur einen Gangrichtung der Gewinde oder in deren Gegenrichtung erforderlich.

Gemäß einer bevorzugten Ausgestaltung des erfindungsgemäßen Befestigungsverfahrens ist der weitere Schritt vorgesehen: Verkleinern oder Vergrößern eines Vertikalabstands zwischen der Haltekonstruktion und der tragenden Horizontalkonstruktion durch Einschrauben oder Ausschrauben des Gewindeendes des Haltebolzens und/oder des Gewindeanschlusses des Vertikalankers in oder aus dem Aufnahmeraum des Gewinderohrs.

Sollte es beispielsweise erforderlich sein, eine Neigung eines Kanals im Vergleich zu einer vertikal über ihm verlaufenden Deckenkonstruktion oder einer Balkenkonstruktion verändern zu müssen, wird vorzugsweise das Gewinderohr weiter auf den Gewindeanschluss des Vertikalankers aufgeschraubt oder es wird das freie Gewindeende des Haltebolzens weiter in das Gewinderohr hinein oder aus diesem heraus geschraubt. Als Konsequenz verändert sich der vertikale Abstand zwischen dem an oberster Stelle angeordneten Vertikalanker und den sich weiter unterhalb von dem Vertikalanker befindlichen tragenden Strukturen des Befestigungssystems, wie beispielsweise eine Traverse oder eine Kanalschelle. Für diese effektive Einstellmöglichkeit ist es somit nicht erforderlich, dass ein Gewinderohr in seiner Länge verändert werden muss, wie es beispielsweise bei herkömmlichen Systemen unter Verwendung von Gewindestangen üblich ist.

Es ist weiterhin bevorzugt, durch die folgenden weiteren Schritte das Befestigungsverfahren zu ergänzen: Bereitstellen des Gewinderohrs als ein Rohr mit einem Innengewindeende und einem freien Rohrende, Ablängen oder Kürzen des Gewinderohrs an dem freien Rohrende auf eine definierte Länge und Vorsehen eines zweiten Innengewindes in dem freien Rohrende gegenüberliegend zu dem vorhandenen Innengewindeende.

Gemäß einer weiteren bevorzugten Ausführungsform vorliegender Erfindung, wird die Effektivität des erfindungsgemäßen Befestigungsverfahren dadurch verbessert, dass das genutzte Gewinderohr zunächst nur mit einem inneren Gewindeende ausgestattet wird. Vor Ort ist es möglich, das freie Ende des Gewinderohrs, in welchem noch kein Innengewinde oder eine anderweitige Verbindungsmöglichkeit angeordnet ist, auf die passende Länge zuzuschneiden. Sobald dieser Zuschnitt und somit die Anpassung der Länge des Gewinderohrs an die Konstruktionsgegebenheiten erfolgt ist, wird in dem freien Ende des Gewinderohrs angrenzend bzw. benachbart zur zweiten Öffnung des Gewinderohrs ein zweites Innengewinde angeordnet. Dies erfolgt beispielsweise mit einem Gewindeeinsatz, der in der zweiten Öffnung des Gewinderohres befestigt wird. Geeignete Befestigungsverfahren sind vorzugsweise ein Kleben, Schwei-βen oder Einpressen. In gleicher Weise ist es bevorzugt, eine Blindnietmutter in dem zweiten Ende des Gewinderohrs verklemmend anzuordnen. Insgesamt eröffnet die Verwendung eines Gewinderohrs mit einem zunächst noch freien Ende die Flexibilität, dass bei noch unklarer Konstruktionssituation bzw. Höhensituation unterhalb des Vertikalankers auf einfache Weise eine Anpassung der Länge des Gewinderohrs an die Befestigungssituation realisiert werden kann.

Vorzugsweise umfasst das Befestigungsverfahren den weiteren Schritt: Einpressen eines Gewindeeinsatzes in das freie Rohrende oder Befestigen einer Blindnietmutter in dem freien Rohrende oder Schneiden eines Innengewindes und Einsetzen eines Drahtgewindeeinsatzes darin in dem freien Rohrende oder Einsetzen eines Drahtgewindeeinsatzes in ein vorhandenes Innengewinde.

Wie oben bereits angedeutet worden ist, sind verschiedene Konstruktionsmöglichkeiten zur Realisierung eines zweiten Innengewindes benachbart zur zweiten Öffnung des Gewinderohrs bevorzugt. Zu diesen alternativen konstruktiven Vorgehensweisen zählt das Befestigen einer Blindnietmutter im freien Ende des Gewinderohrs. Des Weiteren bevorzugt kann ein Gewinde direkt in die Innenwand des Gewinderohrs geschnitten werden. Um sicherzustellen, dass ein männliches Gewindeelement in den Einschraubraum eingeschraubt werden kann, wird das geschnittene Gewinde zusätzlich mit einem Drahtgewindeeinsatz verstärkt und in seinem Nenndurchmesser verringert. Dies stellt vorzugsweise sicher, dass der Einschraubraum einen größeren Innendurchmesser aufweist als der Außendurchmesser eines männlichen Gewindeelements, welches in die zweite Öffnung mit Innengewinde und Drahtgewindeeinsatz eingeschraubt wird. Mit einer weiteren bevorzugten Alternative wird ein Gewindeeinsatz in das zweite Rohrende des Gewinderohrs eingepresst, darin verschweißt, darin verklebt oder anderweitig fest angeordnet.

In dem erfindungsgemäßen Befestigungsverfahren ist der Vertikalanker bevorzugt gemäß folgender konstruktiver Alternativen ausgestaltet: eine Stockschraube ist, die in die Horizontalkonstruktion eingeschraubt wird, oder ein Schussbolzen ist, der in die Horizontalkonstruktion eingeschossen wird, oder ein Schwerlastanker ist, der in der Horizontalkonstruktion befestigt wird, oder eine Gewindestange mit Dübelende ist, die in der Horizontalkonstruktion verschraubt wird.

Wie bereits oben erwähnt worden ist, bildet der Vertikalanker das Befestigungselement in Bezug auf das gesamte Befestigungssystem, welches betrachtet in vertikaler Richtung an höchster Stelle des Befestigungssystems angeordnet ist. Umgangssprachlich ausgedrückt stellt der Vertikalanker ein Befestigungselement dar, welches in einer Deckenkonstruktion eines Raumes und/oder einer Balkenkonstruktion eines Raumes, eines Gebäudes oder einer ähnlichen Konstruktion befestigt wird. Von diesem Vertikalanker wird dann das Befestigungssystem in vertikaler Richtung abwärts aufgebaut.

Als ein bevorzugtes Befestigungselement zur Anordnung in einer Deckenkonstruktion oder in einer horizontalen Balkenkonstruktion eignet sich gemäß vorliegender Erfindung bevorzugt eine Stockschraube, die nach dem Eindrehen in die Horizontalkonstruktion einen Gewindeanschluss bereitstellt. Alternativ dazu wird ebenfalls ein Schussbolzen verwendet, der ein Funktionsende aufweist. Nachdem der Schussbolzen in die Horizontalkonstruktion, also eine Decke oder eine Balkenkonstruktion eines Raums, eingeschossen worden ist, ragt das Funktionsende über die Decke hinaus. Vorzugsweise wird als Funktionsende ein Gewindeende verwendet, um daran das Gewinderohr anschrauben zu können.

Eine weitere bevorzugte Alternative eines Vertikalankers stellt eine bekannte Konzeption eines Schwerlastankers dar. Dieser Schwerlastanker wird in einer passenden Öffnung der Horizontalkonstruktion befestigt und stellt ebenfalls ein Gewindeende passend zum Innengewinde des Gewinderohrs benachbart zu seiner ersten Öffnung bereit. Zudem ist es bevorzugt, eine Gewindestange mit Dübelende als Vertikalanker zu verwenden. In diesem Zusammenhang wird das Dübelende in der Horizontalkonstruktion befestigt, sodass ein verbleibendes Gewindeende der Gewindestange aus der Horizontalkonstruktion hervorragt. Auf diese Gewindestange wird dann bevorzugt das Gewinderohr aufgeschraubt, sodass vorzugsweise ein Teil der Gewindestange in den Einschraubraum des Gewinderohrs ragt. Abhängig von der erforderlichen vertikalen Länge des Befestigungssystems wird die Gewindestange in den Einschraubraum hinein oder aus diesem heraus geschraubt.

Vorliegende Erfindung umfasst zudem ein zweiseitiges Gewinderohr zur beidseitigen Befestigung jeweils eines Bolzens mit Außengewinde, welches die folgenden Merkmale aufweist: ein Rohr mit einander gegenüberliegend einer ersten und einer zweiten Öffnung, ein erstes Innengewinde, das benachbart zur ersten Öffnung angeordnet ist und eine erste Gangrichtung aufweist, und ein zweites Innengewinde, das benachbart zur zweiten Öffnung angeordnet ist und eine zweite Gangrichtung aufweist, deren erste und zweite Gangrichtungen gleich sind, ein Einschraubraum, der zwischen dem ersten und dem zweiten Innengewinde angeordnet ist und einen freien Innendurchmesser aufweist, der größer oder gleich einem größeren Nenndurchmesser des ersten und zweiten Innengewindes ist, das erste und das zweite Innengewinde sind ein benachbart zur ersten und/oder zweiten Öffnung befestigter Gewindeeinsatz oder eine benachbart zur ersten und/oder zweiten Öffnung befestigte Blindnietmutter oder ein benachbart zur ersten und/oder zweiten Öffnung geschnittenes Innengewinde in dem Rohr, mit einem darin angeordneten Drahtgewindeeinsatz oder eine Kombination der oben genannten Alternativen.

Ein zentrales Element des Befestigungssystems für beispielsweise Lüftungskanäle oder dergleichen bildet ein erfindungsgemäßes zweiseitiges Gewinderohr. Zweiseitig bedeuteten diesem Zusammenhang, dass sich angrenzend an die erste Öffnung und die zweite Öffnung des Gewinderohrs im Innern ein Innengewinde befindet, in welches ein männliches Gewindeelement eingeschraubt werden kann. Um die Installation des Befestigungssystems so einfach wie möglich zu gestalten, weisen das erste und das zweite Innengewinde die gleiche Gangrichtung auf. Daraus folgt, dass der Installateur nicht differenzieren muss, in welche Gangrichtung er welches Element des Befestigungssystems schrauben muss, um es jeweils mit dem Gewinderohr verbinden zu können. Als weiterer Vorteil muss das Gewinderohr nicht in einer bestimmten Orientierung verbaut werden. Denn beide Innengewinde passen bevorzugt auf den Vertikalanker oder den Haltebolzen.

Zudem stellt das Gewinderohr ein geschlossenes Element mit einer begrenzten freiliegenden äußeren Oberfläche bereit. Denn eine bevorzugt geschlossene Außenseite des Gewinderohrs kommt allein mit der äußeren Umgebung des Befestigungssystems in Kontakt, sodass eine mögliche Kontamination auf die Größe der Außenfläche des Gewinderohrs beschränkt ist. Da das Gewinderohr zudem bevorzugt eine glatte Oberfläche aufweist, werden nur reduziert Kontaktpunkte bzw. Angriffspunkte für Kontamination an der Außenseite des Gewinderohrs geboten.

Weiterhin bevorzugt in der Konstruktion des zweiseitigen Gewinderohrs ist der Einschraubraum in seiner Länge begrenzt durch die angrenzenden Innengewinde benachbart zur ersten und zweiten Öffnung des Gewinderohrs. Zudem ist der Innendurchmesser des Einschraubraums so groß gewählt, dass er vorzugsweise größer oder gleich dem größten Nenndurchmesser des ersten und zweiten Innengewindes des Gewinderohres ist. Dies gewährleistet, dass ein männliches Gewindeelement, welches in das erste oder zweite Innengewinde eingeschraubt worden ist, ohne weiteres im Einschraubraum aufgenommen werden kann. Dieser Einschraubraum bildet somit einen geschützten Aufnahmeraum für Gewindeflächen eines darin angeordneten männlichen Gewindeelements, sodass diese Gewindeflächen nicht einer Kontamination der Atmosphäre in der Umgebung des Befestigungssystems ausgesetzt sind.

Als geeignete Innengewinde benachbart zur ersten und zweiten Öffnung des Gewinderohrs bieten sich die bereits oben erläuterten unterschiedlichen konstruktiven Alternativen an. So ist es beispielsweise bevorzugt, ein Innengewinde in die Innenseite des Gewinderohrs zu schneiden und darin einen Drahtgewindeeinsatz anzuordnen. Gemäß einer weiteren bevorzugten Alternative wird ein aus vorzugsweise Metall bestehender Gewindeeinsatz in das Ende des Gewinderohrs eingepresst oder eingeklebt oder eingeschweißt. Gemäß einer weiteren bevorzugten Ausgestaltung des zweiseitigen Gewinderohrs wird eine Blindnietmutter in dem Gewinderohr als Innengewinde befestigt.

Gemäß einer bevorzugten Ausführungsform des erfindungsgemäßen zweiseitigen Gewinderohrs weisen das erste und/oder das zweite Gewinde eine Gewindesicherung auf, insbesondere eine verjüngte Windung in dem Drahtgewindeeinsatz oder einen Steigungsverzug in dem Gewindeeinsatz oder einen Sicherungsklebstoff.

In zumindest einem der beiden Innengewinde des Gewinderohrs ist eine Gewindesicherung vorgesehen. Derartige Gewindesicherungen sind im Stand der Technik bekannt. So nutzt beispielsweise ein Drahtgewindeeinsatz zumindest eine verjüngte Windung, um das Einschrauben eines männlichen Gewindeelements zu erschweren. In einem metallischen Gewindeeinsatz wird ein Gewindeverzug verwendet, um ein hemmendes Moment beim Einschrauben und/oder Ausschrauben des männlichen Gewindeelements zu realisieren. Eine weitere Alternative besteht darin, das Gewinde mit einem Sicherungsklebstoff zu versehen, der das Eindrehen ab einer bestimmten Eindrehtiefe des männlichen Gewindeelements erschwert.

Diese Gewindesicherung hat die Funktion, dem installierenden Werker eine definierte Eindrehtiefe des männlichen Gewindeelements zu signalisieren. Ab diesem Moment sind beispielsweise gewisse Abstände und Längen im vertikal ausgerichteten Befestigungssystem definiert und können gezielt durch weitere Drehungen in die eine oder andere Richtung verändert werden.

Gemäß einer weiteren bevorzugten Ausführungsform vorliegender Erfindung weist das zweiseitige Gewinderohr eine radial auswärts vollständig geschlossen umlaufende Mantelfläche auf, die die Innengewinde und den Einschraubraum umgibt.

Gemäß einer weiteren bevorzugten Ausführungsform vorliegender Erfindung wird das zweiseitige Gewinderohr durch eine vollständig geschlossene umlaufende Mantelfläche gebildet. Diese umlaufende Mantelfläche bildet bezogen auf den radialen Innenraum des zweiseitigen Gewinderohrs einen vollständigen Abschluss, sodass der Einschraubraum bei Vorhandensein zweier installierter männlicher Gewindeelemente nach außen weitestgehend abgeschlossen ist. Auf diese Weise wird eine Verunreinigung der im Einschraubraum befindlichen Gewindelängen bzw. Gewindeflächen der männlichen Gewindeelemente vermieden. Zudem gewährleistet gemäß einer weiteren bevorzugten Ausgestaltung vorliegender Erfindung die umlaufende Mantelfläche eine vereinfachte Reinigungsmöglichkeit des zweiseitigen Gewinderohrs im Vergleich zu einer strukturierten Oberfläche einer Gewindestange.

Gemäß einer weiteren bevorzugten Ausführungsform vorliegender Erfindung weist das zweiseitige Gewinderohr eine runde oder eine mehreckige Umfangsgestalt aufweist.

Gemäß einer weiteren bevorzugten Ausgestaltung ist die umfängliche Kontur des zweiseitigen Gewinderohrs rund oder mehreckig ausgebildet. Eine mehreckige Form wird beispielsweise durch einen Sechskant oder einen Vierkant gebildet. Diese eckige Ausgestaltung eröffnet die bevorzugte Möglichkeit, dass Gewinderohr mit einem Werkzeug, wie beispielsweise einem Maulschlüssel, festzuhalten. Zudem ist es möglich, das Gewinderohr mit diesem Werkzeug zu drehen. Auch wenn sich im Vergleich zu einem runden Querschnitt die äußere Oberfläche des Gewinderohrs erhöht, ist dieser zusätzliche Oberflächenanteil immer noch klein im Vergleich zu dem kontaminationsanfälligen großen Oberflächenanteil einer Gewindestange.

Außerdem bevorzugt ist der Einschraubraum des zweiseitigen Gewinderohrs an einer radialen Innenseite gewindelos, insbesondere vollständig eben und weiter bevorzugt durchgängig mit konstantem Innendurchmesser, ausgebildet.

Gemäß einer weiteren bevorzugten Ausgestaltung vorliegender Erfindung ist der Einschraubraum an seiner radialen Innenseite glatt ausgebildet. Denn selbst wenn ein männliches Gewindeelement beim Einschrauben in das zweiseitige Gewinderohr einen Kontakt zur Innenseite des Einschraubraums herstellen sollte, wird auf diese Weise ein Reibungsmoment zwischen dem männlichen Gewindeelement und der Innenseite des Gewinderohrs klein gehalten. Zudem ermöglicht eine unstrukturierte, vorzugsweise glatte radiale Innenwand des Gewinderohrs eine im Durchmesser kleinere Bauweise des Gewinderohrs, als wenn an der radialen Innenseite eine Struktur, beispielsweise ein Gewinde, vorgesehen wäre.

Vorliegende Erfindung umfasst zudem ein einseitiges Gewinderohr zur beidseitigen Befestigung eines Bolzens mit Außengewinde oder zur Befestigung eines Bolzens mit Außengewinde und eines Elements mit Innengewinde, welches die folgenden Merkmale aufweist: ein Rohr mit einander gegenüberliegend einer ersten und einer zweiten Öffnung, ein erstes Innengewinde, das benachbart zur ersten Öffnung angeordnet ist und eine erste Gangrichtung aufweist, ein Einschraubraum, der zwischen dem ersten Innengewinde und der zweiten Öffnung angeordnet ist und einen freien Innendurchmesser aufweist, der größer oder gleich einem Nenndurchmesser des ersten Innengewindes ist, das erste Innengewinde ist:
i. ein benachbart zur ersten Öffnung befestigter Gewindeeinsatz oder ii. eine benachbart zur ersten Öffnung befestigte Blindnietmutter oder iii. ein benachbart zur ersten Öffnung geschnittenes Innengewinde in dem Rohr mit einem darin angeordneten Drahtgewindeeinsatz, wobei das Gewinderohr benachbart zur zweiten Öffnung angepasst ist, um einen Gewindeeinsatz, eine Blindnietmutter oder ein Gewinde in Kombination mit einem Drahtgewindeeinsatz vorzusehen oder um zur Befestigung eines Elements mit Innengewinde einen drehbar oder fest angeordneten Gewindebolzen vorzusehen.

Gemäß einem weiteren Detail vorliegender Erfindung ist für das Befestigungssystem ein einseitiges Gewinderohr vorgesehen. Einseitig bezeichnet in diesem Zusammenhang, dass das Gewinderohr mit nur einem Innengewinde angrenzend an die erste Öffnung des Gewindeohrs vorkonfektioniert ist. Das zweite Ende des Gewinderohrs weist keine Gewindestruktur auf. Dies ermöglicht, dass im Vorfeld einer Installation des Befestigungssystems das Gewinderohr auf eine passende Konstruktionslänge für das Befestigungssystem geschnitten und nachfolgend mit einem Gewindeelement angrenzend an die zweite Öffnung ausgestattet werden kann.

Somit eröffnet das einseitige Gewinderohr eine universelle Anpassbarkeit des Befestigungssystems an unterschiedliche Gegebenheiten an einer Installationsstelle. Zudem ist nicht in jedem Fall eine Vorkonfektion der zu verwendenden Gewinderohre erforderlich. Vielmehr kann durch einen limitierten Arbeitsaufwand direkt im Verlauf des Installationsverfahrens des Befestigungssystems die Längenanpassung des einseitigen Gewinderohrs und die nachfolgende Installation des zweiten Gewindeelements im einseitigen Gewinderohr erfolgen.

Somit ist das einseitige Gewinderohr benachbart zu seiner ersten Öffnung in der gleichen Weise aufgebaut wie das oben beschriebene zweiseitige Gewinderohr. Das zweite Ende des Gewinderohrs ist nach Herstellen der definierten bzw. gewünschten Länge des einseitigen Gewinderohrs daran angepasst, dass benachbart zu der zweiten Öffnung des einseitigen Gewinderohrs ein passendes Gewindeelement installiert werden kann. Sollte für das Befestigungssystem ein Innengewinde erforderlich sein, wird benachbart zur zweiten Öffnung des einseitigen Gewindeelements ein Innengewinde geschnitten und ein Drahtgewindeeinsatz darin installiert. Alternativ dazu ist es ebenfalls bevorzugt, einen metallischen Gewindeeinsatz in die zweite Öffnung des einseitigen Gewinderohrs einzupressen, einzukleben, einzuschweißen oder durch ein anderes Verfahren im einseitigen Gewinderohr zu befestigen. Des Weiteren ist es bevorzugt, dass in der zweiten Öffnung des einseitigen Gewinderohrs alternativ eine Blindnietmutter verpresst wird, sodass in diese ein männliches Gewindeelement einschraubbar ist.

Gemäß einer weiteren bevorzugten Alternative des einseitigen Gewinderohrs ist die zweite Öffnung derart angepasst, dass ein Gewindebolzen angrenzend an die zweite Öffnung und aus dieser herausragend befestigt werden kann. Vorzugsweise ist der aus der zweiten Öffnung herausragende Gewindebolzen fest oder drehbar angeordnet. Derartige konstruktive Alternativen lassen sich beispielsweise durch einen Blindnietbolzen realisieren.

Weiterhin bevorzugt ist innerhalb des Gewinderohrs benachbart zur zweiten Öffnung des einseitigen Gewinderohrs ein radial einwärts ragender umlaufender Kragen vorgesehen. An diesem radial einwärts ragenden Kragen stützt sich der Kopf eines männlichen Gewindeelements derart ab, dass er formschlüssig aber drehbar innerhalb des Innenraums des Gewindes gehalten ist. Dieses drehbare Gewindeelement weist vorzugsweise an seinem Kopf einen Antriebsmittel auf, um mit einem passenden Werkzeug, beispielsweise ein Inbusschlüssel, in dieses Antriebsmittel eingreifen und dieses drehen zu können. Zu diesem Zweck ragt das Werkzeug vorzugsweise durch die erste Öffnung bis hin zum drehbar angeordneten männlichen Gewindeelement innerhalb der zweiten Öffnung. Die konstruktive Alternative in Kombination mit dem innerhalb des einseitig im Gewinderohr angeordneten männlichen Gewindeelements eröffnet die Möglichkeit der Verbindung dieses Gewindeelements beispielsweise mit einer Rohrschelle zum Halten eines runden Kanalsegments. Zudem ist es möglich, dieses männliche Gewindeelement an andere Haltestrukturen anzuknüpfen bzw. mit diesem zu verschrauben, wenn sie ein passendes und aufnehmendes Mutterngewinde bereitstellen.

Gemäß einer bevorzugten Ausgestaltung des einseitigen Gewinderohrs weist das erste Gewinde eine Gewindesicherung auf, insbesondere eine verjüngte Windung in dem Drahtgewindeeinsatz oder einen Steigungsverzug in dem Gewindeeinsatz oder einen Sicherungskleber.

Gemäß einer weiteren bevorzugten Ausgestaltung des einseitigen Gewinderohrs ist in dem ersten Gewinde des Gewinderohrs eine Gewindesicherung vorgesehen. Diese nutzt die Konstruktionsalternativen die oben im Hinblick auf das zweiseitige Gewinderohr beschrieben worden sind.

Gemäß einer weiteren bevorzugten Ausführungsform vorliegender Erfindung weist das einseitige Gewinderohr eine radial auswärts vollständig geschlossene umlaufende Mantelfläche auf, die die Innengewinde und den Einschraubraum umgibt.

Ebenfalls in bevorzugter Analogie zum zweiseitigen Gewinderohr weist auch das einseitige Gewinderohr eine radial auswärts vollständig geschlossene umlaufende Mantelfläche auf. Damit werden nach Anordnung des zweiten Gewindeelements benachbart zur zweiten Öffnung des einseitigen Gewinderohrs die gleichen Vorteile erzielt, wie sie bereits oben in Kombination mit dem zweiseitigen Gewinderohr beschrieben worden sind.

Gemäß einer weiteren bevorzugten Ausführungsform vorliegender Erfindung weist das einseitige Gewinderohr eine runde oder eine mehreckige Umfangsgestalt aufweist.

Auch im Hinblick auf die bevorzugte Gestaltung der Umfangsform des einseitigen Gewinderohrs wird auf die bevorzugte Analogie zum zweiseitigen Gewinderohr verwiesen. Entsprechend gelten die oben beschriebenen Besonderheiten und Funktionen der umfänglichen Formgestaltung des zweiseitigen Gewinderohrs in gleicher Weise für die bevorzugte umfängliche Formgestaltung des einseitigen Gewinderohrs.

Gemäß einer ebenfalls bevorzugten Ausführungsform vorliegender Erfindung ist der Einschraubraum des einseitigen Gewinderohrs an einer radialen Innenseite gewindelos, insbesondere vollständig eben und weiter bevorzugt durchgängig mit konstantem Innendurchmesser, ausgebildet.

Es ist des Weiteren bevorzugt, dass der fest angeordnete Gewindebolzen in der zweiten Öffnung ein Blindnietbolzen oder eine befestigte Schraube ist. Alternativ dazu ist vorzugsweise der drehbar angeordnete Gewindebolzen eine Schraube mit Schraubenkopf, der an einem rohrinneren radial einwärts ragenden Kragen benachbart zur zweiten Öffnung drehbar abgestützt ist.

Vorliegende Erfindung umfasst zudem einen Satz von Gewinderohren der oben im Detail beschriebenen Alternativen des zweiseitigen Gewinderohrs und des einseitigen Gewinderohrs. Dieser Satz eines Gewinderohrs stellt eine vorteilhafte Vorbereitung des oben beschriebenen Installationsverfahrens des Befestigungssystems dar. Denn zur bevorzugten Installation beispielsweise eines Kanalsegments unter einer Horizontalkonstruktion, wie beispielsweise einer Decke oder einer Balkenkonstruktion, ist es erforderlich,

dass eine gewisse Anzahl an zweiseitigen und/oder einseitigen Gewinderohren für die Installation des Befestigungssystems zur Verfügung stehen. Die zweiseitigen Gewinderohre sind vorteilhafterweise in unterschiedlichen Längen innerhalb des Satzes von Gewinderohren enthalten. Entsprechend können Sie je nach Anwendungssituation durch den Werker gewählt und installiert werden. Ein Satz von einseitigen Gewinderohren eröffnet die Möglichkeit, dass der Installateur das einzelne einseitige Gewinderohr auf die passende Länge zuschneiden kann und nachfolgend das Gewindeelement benachbart zur zweiten Öffnung installiert. Somit lassen sich vor Ort angepasste Gewinderohre für die jeweilige Installationssituation mit limitiertem Aufwand bereitstellen.

Vorliegende Erfindung umfasst des Weiteren einen Satz von Gewinderohren unterschiedlicher Länge gemäß einer der oben beschriebenen Ausgestaltungen.

Vorliegende Erfindung offenbart zudem ein Herstellungsverfahren eines einseitigen oder eines zweiseitigen Gewinderohrs gemäß einer der oben beschriebenen Ausgestaltungen, welches die folgenden Schritte aufweist: a. Bereitstellen eines geradlinigen Rohrs mit einer ersten und einer zweiten Öffnung und einer definierten Länge, b. Befestigen eines Gewindeeinsatzes benachbart zur ersten und/oder zweiten Öffnung oder c. Schneiden eines Innengewindes in eine Rohrwand des Gewinderohrs benachbart zur ersten und/oder zweiten Öffnung und d. Einsetzen eines Drahtgewindeeinsatzes in das geschnittene Gewinde oder Einsetzen eines Drahtgewindeeinsatzes benachbart zur ersten und/oder zweiten Öffnung in ein im Gewinderohr vorhandenes Innengewinde oder e. eine Kombination der Schritte b. bis d. zur Erzeugung unterschiedlicher Konfigurationen benachbart zu der ersten und der zweiten Öffnung.

Das erfindungsgemäße Herstellungsverfahren des einseitigen oder des zweiseitigen Gewinderohrs zeichnet sich weiterhin bevorzugt dadurch aus, dass der Gewindeeinsatz eingepresst oder eingeklebt oder eingeschweißt wird.

Vorliegende Erfindung offenbart außerdem eine Vertikalbefestigung eines Kanals zur Führung eines Mediums oder von Leitungen, die die folgenden Merkmale aufweist: einen Vertikalanker mit einem Gewindeanschluss, ein Gewinderohr gemäß einer der obigen Ausgestaltungen, einen Haltebolzen in Kombination mit einer Haltetraverse als Auflage für einen Kanal oder einer Halteschelle für einen runden Kanal, wobei ein Außengewinde des Haltebolzens passend zu einem Innengewinde des Gewinderohrs ausgebildet ist, oder eine Halteschelle für einen runden Kanal mit einem Mutterngewinde, welches passend zu einem Außengewinde eines Gewindebolzens in der zweiten Öffnung des Gewinderohr ausgebildet ist.

Zur Realisierung des oben beschriebenen Befestigungsverfahrens in seinen unterschiedlichsten Ausgestaltungen wird erfindungsgemäß bevorzugt die oben beschriebene Vertikalbefestigung eingesetzt. Diese besteht bevorzugt aus den verschiedenen Einzelkomponenten, die ebenfalls oben in ihren unterschiedlichen Ausgestaltungen erläutert worden sind. So bildet vorzugsweise der Vertikalanker den vertikal obersten Befestigungspunkt des Befestigungssystems betrachtet in seiner vertikal ausgerichteten Ausgestaltung. Der Vertikalanker ist vorzugsweise ein Schwerlastanker oder eine Stockschraube oder ein Schussbolzen mit Gewindeanschluss oder eine Gewindestange mit Dübelende oder ein Trapezblech-Halter mit Gewindeanschluss. Diese Alternativen des Vertikalankers zeichnen sich jeweils dadurch aus, dass sie sich in oder an der Horizontalkonstruktion, d. h. eine Decke oder eine Balkenkonstruktion, befestigen lassen und gleichzeitig einen Gewindeanschluss hervorragend aus der Horizontalkonstruktion bereitstellen. Denn dieser bevorzugte Gewindeanschluss ist passend ausgebildet zum Innengewinde des einseitigen oder zweiseitigen Gewinderohrs benachbart zu seiner ersten Öffnung. Auf diese Weise ist gewährleistet, dass der Vertikalanker und das einseitige oder zweiseitige Gewinderohr eine verlässliche Gewindeverbindung innerhalb der Vertikalbefestigung herstellen.

Über das bevorzugte Gewindeelement am zweiten Ende des Gewinderohrs wird über einen Haltebolzen eine Auflage bzw. ein Trageelement für einen Kanal an dem Gewinderohr befestigt. Ein derartiges Trageelement ist beispielsweise eine balkenförmige Traverse oder aber auch eine Schelle, mit der ein Kanalsegment gehalten werden kann. Während die Schelle vorzugsweise einen rund ausgebildeten Kanal umgreift und auf diese Weise hält, bildet die bevorzugte Traverse einen Auflagebalken, auf dem basierend auf der Wirkung der Schwerkraft der Kanal aufliegt. Halteschelle oder Traverse lassen sich mithilfe eines geeigneten Haltebolzens in das zweite Innengewinde benachbart zur zweiten Öffnung des Gewinderohres befestigen. Im Hinblick auf die Halteschelle ist es bevorzugt, dass ein einseitiges Gewinderohr mit einem aus der zweiten Öffnung des Gewinderohrs hervorragenden männlichen Gewindeelements bereitgestellt wird, um dieses mit der tragenden Schelle zu verbinden.

In der erfindungsgemäßen Vertikalbefestigung ist vorzugsweise der Vertikalanker ein Schwerlastanker oder eine Stockschraube oder ein Schussbolzen mit Gewindeanschluss oder eine Gewindestange mit Dübelende.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine perspektivische Ansicht einer bevorzugten Installation eines Kanals mit der bevorzugten anpassbaren Vertikalbefestigung,
- Figur 2: eine schematische Schnittansicht einer bevorzugten Ausführungsform der erfindungsgemäßen Vertikalbefestigung,
- Figur 3: eine bevorzugte Ausführungsform einer zweistöckigen Vertikalbefestigung mit zwei vertikal übereinander angeordneten Kanälen,
- Figur 4: eine schematische Schnittansicht einer bevorzugten Ausführungsform der Vertikalbefestigung in Kombination mit einer Schelle zum Halten eines runden Kanals,
- Figur 5: eine perspektivische Seitenansicht der bevorzugten Vertikalbefestigung in Kombination mit einem runden Kanal,
- Figur 6: eine schematische Schnittansicht eines Teils der Vertikalbefestigung mit einer Traverse,
- Figur 7: eine weitere bevorzugte schematische Schnittansicht einer bevorzugten Ausführungsform der Vertikalbefestigung mit Gewinderohr und Traverse,
- Figur 8: eine weitere schematische Schnittansicht der Vertikalbefestigung in Kombination mit einer Gewindestange mit Dübelende als Vertikalanker und einer Traverse,
- Figur 9: eine vergrößerte schematische Schnittansicht einer bevorzugten Ausführungsform einer Stockschraube, die in einer Bohrung mit Dübel befestigbar ist,
- Figur 10: eine bevorzugte Illustration der Einstellbarkeit unterschiedlicher vertikaler Abstände eines Kanals oder der Traverse zur Horizontalkonstruktion über die Längenanpassung der Vertikalbefestigung,
- Figur 11: bevorzugte Ausführungsformen des einseitigen Gewinderohrs und dessen Anpassbarkeit,
- Figur 12: unterschiedliche bevorzugte Konfigurationen des einseitigen und des zweiseitigen Gewinderohrs,
- Figur 13: ein Flussdiagramm einer bevorzugten Ausführungsform des erfindungsgemäßen Befestigungsverfahrens,
- Figur 14: ein Flussdiagramm einer bevorzugten Ausführungsform eines Herstellungsverfahrens eines einseitigen oder eines zweiseitigen Gewinderohrs.

### 5. Detaillierte Beschreibung der bevorzugten Ausführungsformen

Vorliegende Erfindung offenbart eine Vertikalbefestigung V für einen Kanal oder ein Kanalsegment K. Als Kanal oder Kanalsegment K wird ein lang gestreckter und von einer Wand umfänglich und quer zur Verlaufsrichtung umschlossener Hohlraum verstanden. Derartige Kanäle K und Kanalsegmente weisen eine viereckige, runde oder mehreckige Querschnittsform auf und sind aus Metall, vorzugsweise Blech, oder Kunststoff hergestellt.

Zudem werden derartige Kanäle in bekannter Weise in Belüftungssystemen, in Kombination mit Klimaanlagen von Räumen und Gebäuden oder Gebäudeteilen eingesetzt. Als weiterer Anwendungsfall dienen die Kanäle K zur Aufnahme und Führung von Kabelsträngen oder dergleichen.

Derartige Kanäle werden bevorzugt betrachtet in vertikaler Richtung unterhalb einer Decke von Räumen, Hallen und dergleichen oder unterhalb einer entsprechenden Balkenkonstruktion befestigt. In diesem Zusammenhang stellt eine die Vertikalbefestigung tragende Balkenkonstruktion neben einer Balkenkonstruktion in einem Raum, einem Gebäude oder einer Halle auch jede freistehende Balkenkonstruktion beispielsweise in Form eines Tores oder einer T-Konstruktion dar. Zusammenfassend wird vorzugsweise und im Sinne der Erfindung eine Decke oder eine tragende Balkenkonstruktion als Horizontalkonstruktion H bezeichnet, da sie einen für die Vertikalbefestigung V vertikal höchsten Befestigungspunkt oder eine horizontal verlaufende Befestigungsfläche bereitstellt.

Die Bezeichnung Vertikalbefestigung V hebt zudem bevorzugt hervor, dass von der Horizontalkonstruktion H in Schwerkraftrichtung, also in vertikaler Richtung abwärts, das System oder die Komponenten der Vertikalbefestigung V zusammenwirken, insbesondere kraft- und/oder formschlüssig, um einen Kanal K oder ein Kanalsegment in einem definierten Vertikalabstand A vertikal unterhalb der Horizontalkonstruktion H zu halten.

Zur Befestigung und zum Halten der Vertikalbefestigung V an einer Horizontalkonstruktion H wird ein Vertikalanker 10 in der Horizontalkonstruktion H befestigt. Der Vertikalanker 10 weist zur Befestigung in der Horizontalkonstruktion H ein Befestigungsende 12 auf. Um den Vertikalanker 10 mit einem Gewinderohr 30 der Vertikalbefestigung V zu verbinden, weist der Vertikalanker 10 einen Gewindeanschluss 14 mit einem Außengewinde auf. Es ist ebenfalls bevorzugt, anstelle des Gewindeanschlusses 14 einen Rastanschluss vorzusehen, sofern das Gewinderohr 30 eine passende Rastaufnahme bereitstellt.

Als Vertikalanker 10 werden bevorzugt alle Befestigungselemente verwendet, die sich kraft- und/oder formschlüssig in der Horizontalkonstruktion H befestigen lassen und als Funktionsende einen Gewindeanschluss 14 oder einen Rastanschluss aufweisen. Vorzugsweise werden als Vertikalanker 10 in einer tragenden Balken-, Träger- oder Deckenkonstruktion H befestigt (Schritt S1): a) ein Schussbolzen mit einem Gewindeanschluss, der in die Horizontalkonstruktion H eingeschossen wird, b) eine Stockschraube mit einem Einschraubgewinde für die Horizontalkonstruktion H und dem Gewindeanschluss für das Gewinderohr 30, c) ein Schwerlastanker, der sich kraft- und/oder formschlüssig in einer Bohrung oder Öffnung der Horizontalkonstruktion H hält und einen Gewindeanschluss bereitstellt, oder d) eine Gewindestange mit Dübelende, deren Dübelende in der Horizontalkonstruktion H verdübelt oder allgemein befestigt wird und deren Gewinde zum Verbinden mit dem Gewinderohr 30 dient.

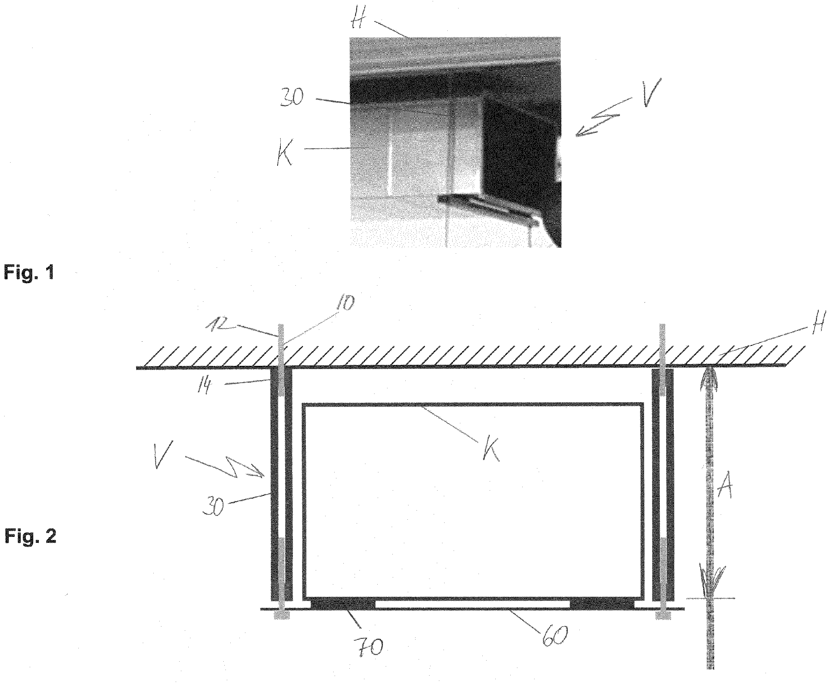

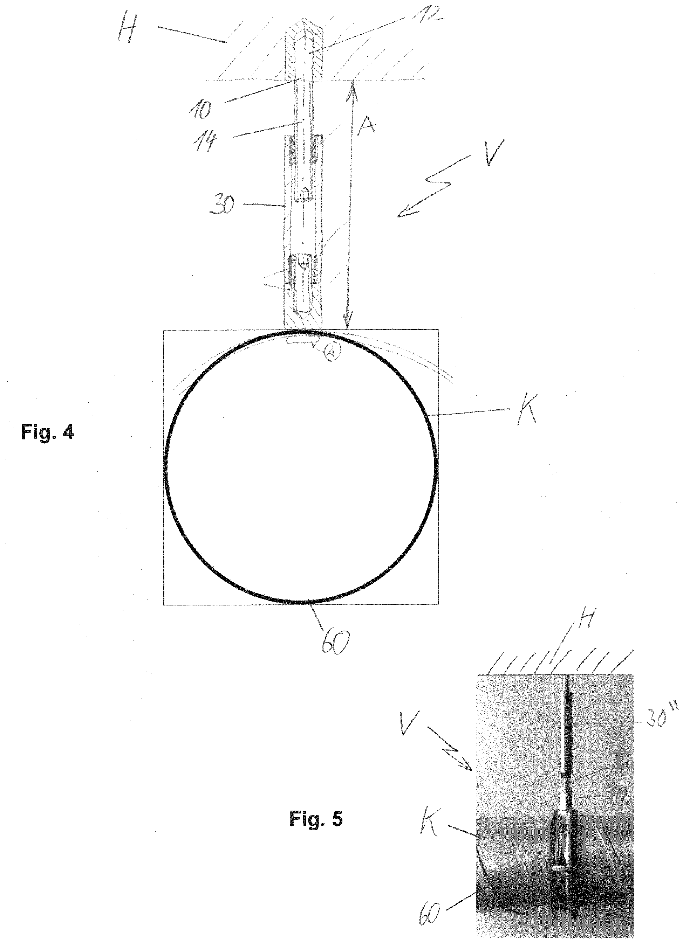

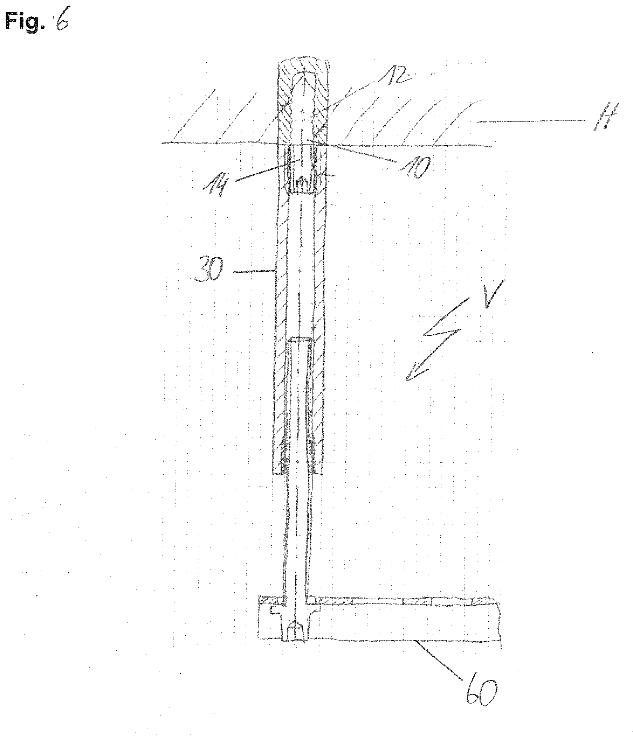

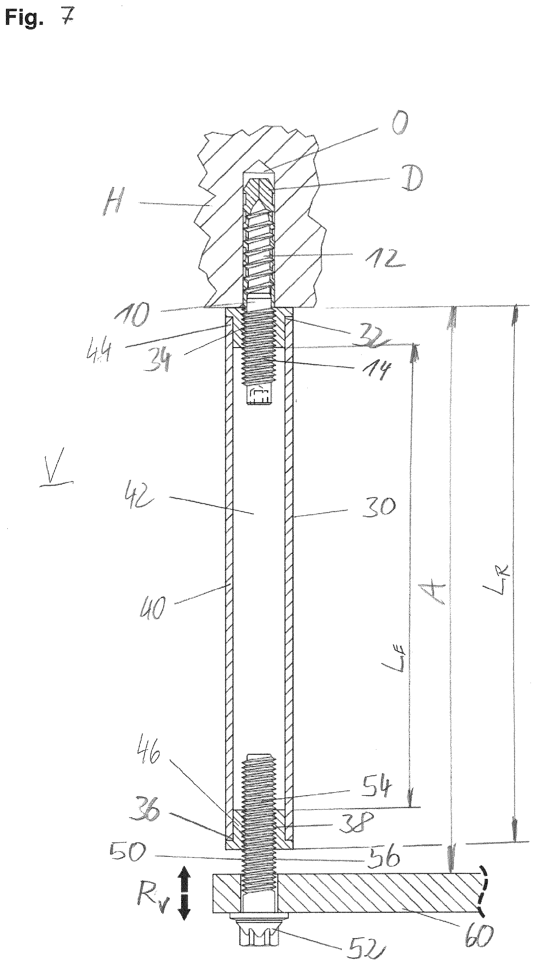

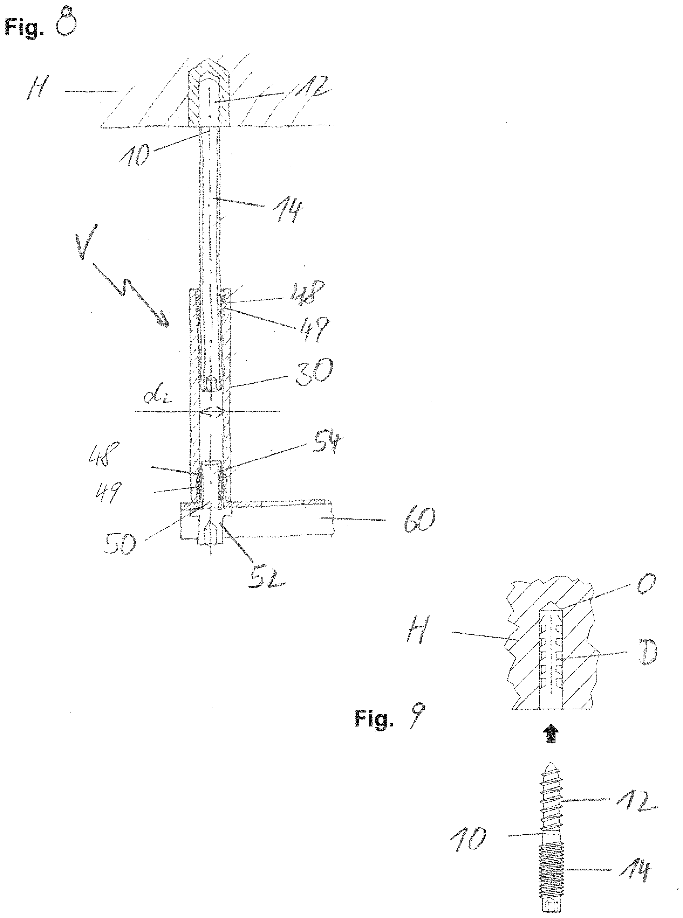

In den Figuren 2, 3, 4, 6, 7-9 und 10 ist der Vertikalanker 10 schematisch dargestellt. Es ist erkennbar, dass der Vertikalanker 10 bezogen auf die vertikale Wirkungsrichtung der Schwerkraft den vertikal obersten Punkt der Vertikalbefestigung V in der Horizontalkonstruktion H bildet. Figur 4 zeigt als bevorzugte Ausgestaltung des Vertikalankers 10 die Gewindestange mit Dübelende. Figuren 7 und 9 zeigen als Vertikalanker 10 eine bevorzugte Stockschraube mit Gewindeanschluss, während Figur 8 schematisch vereinfacht einen bevorzugten Schwerlastankern wiedergibt.

Der Gewindeanschluss 14 des Vertikalankers 10 wird mit einem Gewinderohr 30 verbunden (Schritt S2), wie es gemäß unterschiedlicher bevorzugter Ausführungsformen vorliegender Erfindung in den Figuren 4, 6, 7, 8 aber auch in den Figuren 2, 3 und 10 gezeigt ist.

Das Gewinderohr 30 weist eine erste Rohröffnung 32 und eine zweite Rohröffnung 36 auf. Benachbart zur ersten Rohröffnung 32 ist ein erstes Innengewinde 34 mit einer ersten Gangrichtung angeordnet. Das erste Innengewinde 34 ist angepasst, um mit dem Gewindeanschluss 14 des Vertikalankers 10 eine Gewindeverbindung herzustellen (Schritt S2).

Benachbart zur zweiten Rohröffnung 36 ist ein zweites Innengewinde 38 mit einer zweiten Gangrichtung angeordnet. Das zweite Innengewinde 38 ist angepasst, um mit einem Außengewinde 52 eines Haltebolzens 50 eine passende Gewindeverbindung herzustellen (Schritt S3).

Die Innengewinde 34, 38 des Gewinderohrs 30 weisen die gleiche Gangrichtung auf. Dies hat den praktischen Vorteil, dass beim Verbinden des ersten Innengewindes 34 mit dem Gewindeanschluss 14 des Vertikalankers 10 und des zweiten Innengewinde 38 mit dem Haltebolzen 50 (Schritt S3) durch den Werker nicht auf unterschiedliche Drehrichtungen beim Zusammenbau geachtet werden muss. Vielmehr ist die gleiche Drehrichtung aufgrund der gleichen Gangrichtung beider Gewindepaarung bevorzugt und maßgeblich.

Der Haltebolzen 50 hat vorzugsweise einen Kopf 52 und einen Schaft 54. Auf dem Schaft 54 ist ein Außengewinde 56 angeordnet, sodass ein freies Gewindeende des Schafts 54 in das zweite Innengewinde 38 benachbart zur zweiten Öffnung 36 eingeschraubt oder aus diesem ausgeschraubt werden kann. Vorzugsweise wird der Schaft 54 in einer Öffnung 62 einer Haltekonstruktion 60, vorzugsweise eine Traverse, ein Balken, eine Halteverstrebung, ein Zwischenboden, angeordnet. Während sich bevorzugt die Haltekonstruktion 60 am Kopf 52 des Haltebolzens 50 abstützt, gewährleistet die Gewindeverbindung zwischen dem Außengewinde 56 auf dem Schaft 54 und dem zweiten Innengewinde 38 die Verbindung zwischen dem Vertikalanker 10 und der Haltekonstruktion 60. Da der Kanal K vorzugsweise auf der Haltekonstruktion 60 aufliegt, wird er durch obiges Zusammenwirken durch den Vertikalanker 10 gehalten.

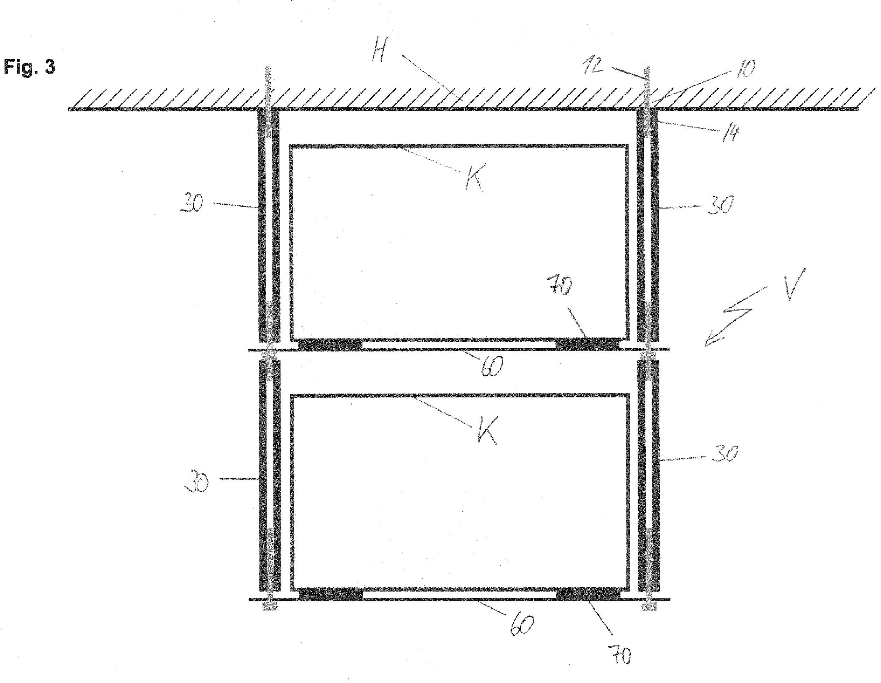

Um die Auflage des Kanals K auf der Haltekonstruktion 60, insbesondere eine Traverse oder ein Haltebalken oder ein Zwischenboden, zu sichern, ist ein Zwischenelement 70 vorgesehen (siehe Figuren 2 und 3). Dieses Zwischenelement 70 ist gemäß unterschiedlichen bevorzugten Ausgestaltungen ein Dämpfungselement gegen Schwingungen des Kanals K, ein rutschfestes Fixierelement gegen mögliche Bewegungen des Kanals K, eine Geräuschdämmung zur Vermeidung einer Schallfortpflanzung in den Kanalwänden oder eine Kombination davon.

Figur 7 zeigt die bereits oben diskutierte Ausführungsform der Vertikalbefestigung V, die über den Vertikalanker 10 in der Horizontalkonstruktion H befestigt ist. In dieser bevorzugten Ausgestaltung ist der Vertikalanker 10 eine Stockschraube. Das Befestigungsende 12 der Stockschraube wurde in einen Dübel D eingedreht, der in einer Bohrung O der Horizontalkonstruktion H angeordnet ist. Ein ähnliches Dübelende wird auch verwendet, um eine Gewindestange mit Dübelende in der Horizontalkonstruktion H zu befestigen.

In Figur 7 ist zudem das bevorzugte Einstellen des Vertikalabstands A zwischen der Horizontalkonstruktion H und der Haltekonstruktion 60 oder Traverse bzw. dem Kanal K gezeigt. Durch ein bevorzugtes Einstellen einer vertikalen Erstreckung oder Länge der Vertikalbefestigung V wird der genannte Vertikalabstand A in einer Verstellrichtung R_{V} verändert. Der Vertikalabstand A lässt sich verkleinern oder vergrößern (Schritt S4), indem das Gewindeende oder der Gewindeanschluss 14 weiter in das Gewinderohr 30 hinein oder aus diesem herausgeschraubt wird. Das gleiche Ziel wird erreicht, indem der Schaft 54 mit Außengewinde 56 in das Gewinderohr 30 oder aus diesem herausgeschraubt wird.

In diesem Zusammenhang zeigt Figur 9 eine vergrößerte Darstellung der Stockschraube als Vertikalanker 10, wie sie in den Dübel D in der Bohrung O eingeschraubt wird.

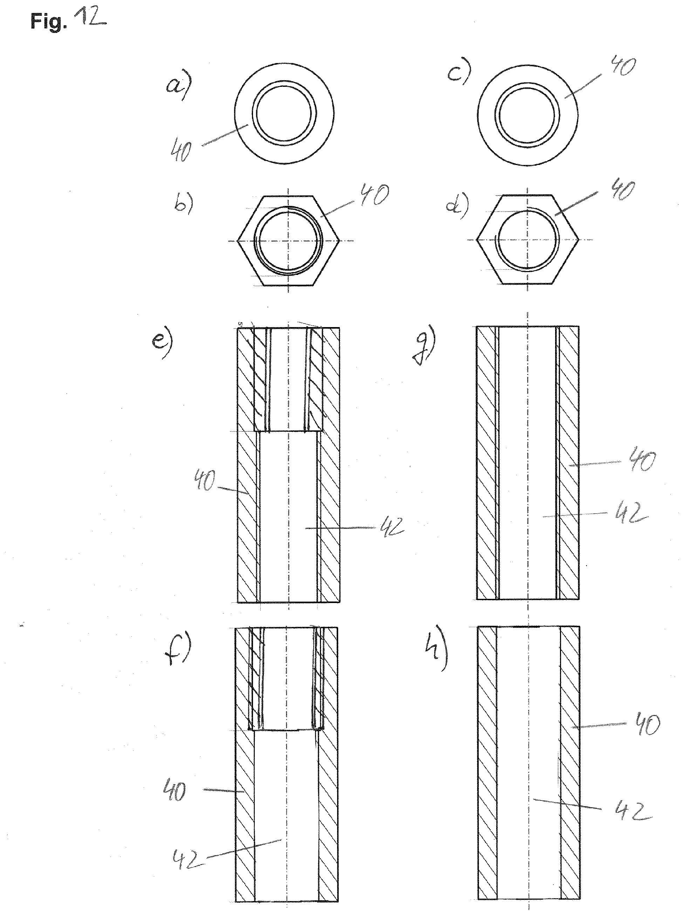

Das Gewinderohr 30 ist in unterschiedlichen bevorzugten Ausführungsformen in den Figuren 4, 6, 7, 8, 11 und 12 gezeigt. Das Gewinderohr 30 weist einander gegenüberliegend die erste Rohröffnung 32 und die zweite Rohröffnung 36 auf. Benachbart zur ersten und zweiten Rohröffnung 32, 36 sind das erste und das zweite Innengewinde 34, 38 angeordnet. Das Gewinderohr 30 hat vorzugsweise eine runde Umfangsform, wie es die Figuren 12 a-c veranschaulichen. Ebenfalls bevorzugt ist eine mehreckige Umfangsform, vorzugsweise eine vier-, sechs- oder achteckige Umfangsform, wie es in den Figuren 12 b, c gezeigt ist.

Das Gewinderohr 30 weist eine umfängliche umlaufende Mantelfläche 40 auf. Die Mantelfläche 40 schließt das erste und zweite Innengewinde 34, 38 sowie die darin eingeschraubten männlichen Gewindeelemente, wie den Gewindeanschluss 14 und den Schaft 54 mit Außengewinde 56, ein.

Gemäß einer bevorzugten Ausführungsform des Gewinderohrs 30 ist die Mantelfläche 40 radial auswärts vollständig geschlossen ausgebildet. Auf diese Weise wird die Oberfläche der Gewindeelemente 14, 34, 56, 38 vor einem Kontakt mit einer die Vertikalbefestigung V umgebenden Atmosphäre abgeschirmt. Dadurch werden Verunreinigungen der Oberfläche und damit verbundener Reinigungsaufwand in hygienisch empfindlichen Bereichen, wie beispielsweise Laboren, Küchen oder Krankenhäusern, reduziert oder verhindert.

In diesem Zusammenhang ist es ebenfalls bevorzugt, die äußere Mantelfläche 40 glatt und strukturlos auszubilden. Dies reduziert ebenfalls verschmutzungsempfindliche Oberflächenbereiche.

Gemäß einer weiteren bevorzugten Ausgestaltung vorliegender Erfindung besteht das Gewinderohr 30 aus Edelstahl, um die Gefahr von Verunreinigungen zu senken.

Zwischen dem ersten 34 und dem zweiten Innengewinde 38 ist ebenfalls bevorzugt ein Einschraubraum 42 vorgesehen. Der Einschraubraum 42 nimmt die Bereiche der männlichen Gewindeelemente 14, 54 auf, die in die Innengewinde 34, 38 eingeschraubt worden sind.

Die axiale Länge L des Einschraubraums 40 zwischen dem ersten 34 und dem zweiten Innengewinde 38 gewährleistet einen Verstellweg für die Gewindeelemente 14, 56, da die Gewindeelemente 14, 54 in oder aus dem Einschraubraum 40 bewegt werden können. Auf diese Weise wird eine Flexibilität in der Einstellung des Abstands A und in der vertikalen Länge der Vertikalbefestigung V bereitgestellt.

Gemäß unterschiedlicher bevorzugter Ausführungsformen vorliegender Erfindung weist der Einschraubraum 42 ein Gewinde auf (siehe Figur 12 e und g) oder ist ohne ein Innengewinde an der radialen Innenseite der Mantelfläche 40 vorgesehen (siehe Figur 12 f und h). Die Ausführungsform ohne ein Innengewinde hat den Vorteil, dass die männlichen Gewindeelemente 14, 56 widerstandslos in und aus dem Einschraubraum 42 laufen können.

Weiterhin bevorzugt weist der Einschraubraum 42 einen konstanten Innendurchmesser und eine ebene Oberfläche über seine axiale Länge auf. Dies ermöglicht ebenfalls ein widerstandsloses Ein- und Ausschrauben der oben genannten männlichen Gewindeelemente.

Um das Gewinderohr 30 bereitzustellen, wird jeweils benachbart zur ersten und zweiten Rohröffnung 32, 36 das erste und zweite Innengewinde 34, 38 angeordnet. Zu diesem Zweck werden vorzugsweise in die erste 32 und die zweite Rohröffnung 36 ein erster 44 und ein zweiter Gewindeeinsatz 46 gesetzt. Alternativ dazu ist es ebenfalls bevorzugt, eine Blindnietmutter jeweils in der ersten und zweiten Rohröffnung 32, 36 durch Verpressen anzuordnen. Die oben genannten Gewindeeinsätze 44, 46 werden in bekannter Weise eingepresst, eingeklebt, eingeschweißt oder mittels Ultraschall befestigt.

Als eine weitere bevorzugte Ausführungsformen vorliegender Erfindung wird an der radialen Innenseite des Gewinderohrs 30 benachbart zur ersten 32 und zweiten Rohröffnung 36 ein Gewinde 48 geschnitten. In das Gewinde 48 wird dann ein Drahtgewindeeinsatz 49 eingeschleppt oder darin angeordnet. Der Drahtgewindeeinsatz 49 erzeugt ein Gewinde mit einem Nenndurchmesser Dₙ, der kleiner ist als ein Innendurchmesser dᵢ des Einschraubraums 42 des Gewinderohrs 30.

Bei einem bevorzugt konstanten Innendurchmesser dᵢ des Einschraubraums 42 stellt der Drahtgewindeeinsatz mit seinem Nenndurchmesser Dₙ sicher, dass die männlichen Gewindeelemente 14, 56 widerstandslos in den Einschraubraum 42 geschraubt werden können. Dieser Zusammenhang gilt ebenfalls für die Anwendung von Gewindeeinsätzen 44, 46 und Blindnietmuttern. Der maximale Nenndurchmesser von erstem und zweitem Innengewinde 34, 38 ist bevorzugt kleiner als der konstante Innendurchmesser dᵢ über die axiale Länge des Einschraubraums 42. Somit ist das widerstandslose Ein- und Ausschrauben der männlichen Gewindeelemente 14, 56 in und aus dem Einschraubraum 42 bei dem Einsatz von Gewindeeinsätzen, Blindnietmuttern sowie geschnittenen Gewinden mit Drahtgewindeeinsatz gewährleistet.

Es ist ebenfalls bevorzugt, die oben genannten Gewindeelemente in einem Gewinderohr 30 miteinander zu kombinieren.

Gemäß vorliegender Erfindung wird das mit zwei Innengewinden 34, 38 ausgestattete Gewinderohr 30 als zweiseitiges Gewinderohr 30 bezeichnet. Um während der Installation des vertikalen Befestigungssystems V eine möglichst große Flexibilität in der Anpassung des Befestigungssystem V an die örtlichen und konstruktiven Besonderheiten von Horizontalkonstruktion H und Kanälen K zu haben, wird bevorzugt ein Satz von zweiseitigen Gewinderohren 30 bereitgestellt. Der Satz von zweiseitigen Gewinderohren 30 enthält bevorzugt eine Anzahl von zweiseitigen Gewinderohren 30 unterschiedlicher Länge und/oder unterschiedlicher Gewindegrößen.

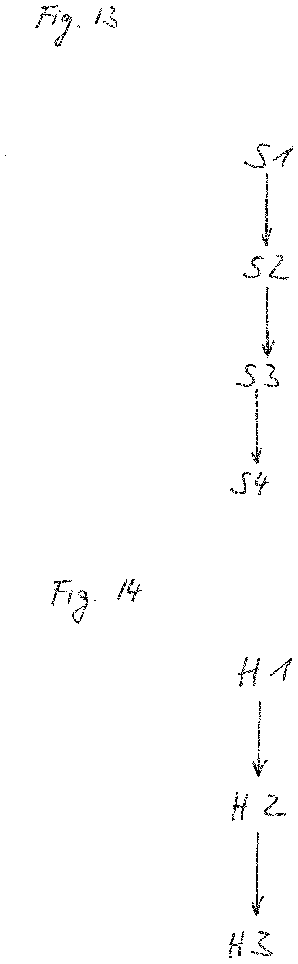

Gemäß einer weiteren bevorzugten Ausführungsform des Befestigungsverfahren wird ein einseitiges Gewinderohr 30' (siehe Figur 13) bereitgestellt. Das einseitige Gewinderohr 30' hat die gleichen konstruktiven Merkmale wie das oben beschriebene zweiseitige Gewinderohr 30 mit dem Unterschied, dass das zweite Innengewinde 38 benachbart zur zweiten Rohröffnung 36 noch nicht vorgesehen ist. Entsprechend weist das einseitige Gewinderohr 30' ein freies Rohrende an der zweiten Rohröffnung 36 auf.

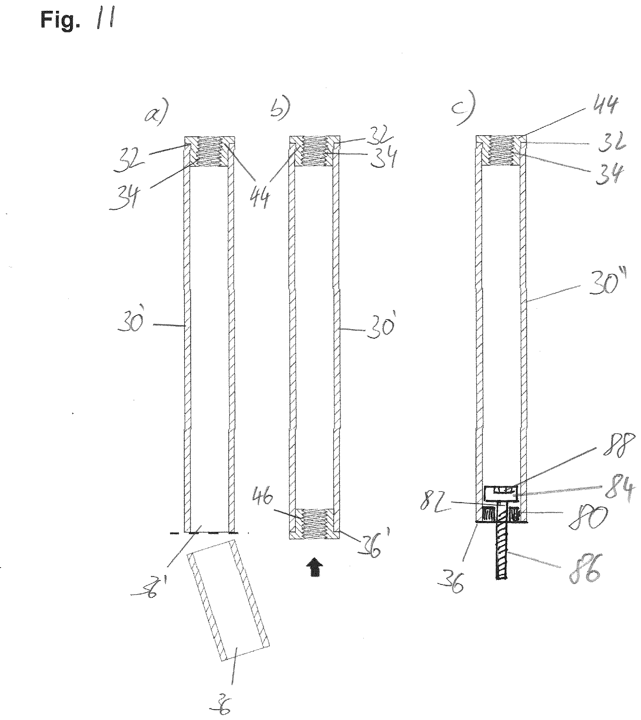

Im Rahmen der Installation des Befestigungssystems V wird vorzugsweise das einseitige Gewinderohr 30' an seinem freien Ende abgelängt oder auf die nötige Länge gekürzt. Dabei entsteht eine neue zweite Rohröffnung 36'. Benachbart zur neuen zweiten Rohröffnung 16' wird das zweite Innengewinde 38 gemäß oben diskutierter Konstruktionsalternativen angeordnet (siehe Figur 11 a, b).

In Bezug auf das einseitige Gewinderohr 30' ist es ebenfalls bevorzugt, einen Satz von einseitigen Gewinderohren 30' zur Installation des vertikalen Befestigungssystems V vorzusehen. Der Satz einseitiger Gewinderohre 30' umfasst eine Anzahl von einseitigen Gewinderohren 30' unterschiedlicher Länge.

Das einseitige 30' und das zweiseitige Gewinderohr 30 weisen bevorzugt eine Gewindesicherung in den Innengewinden 34, 38 auf. Diese umfassen bekannte Ausgestaltungen, wie eine verjüngte Windung im Drahtgewindeeinsatz, ein Steigungsverzug in einem Gewindeeinsatz oder einer Blindnietmutter oder es wird Sicherungskleber im Gewinde eingesetzt.

Gemäß unterschiedlicher bevorzugter Ausführungsformen des zweiseitigen Gewinderohrs 30, 30', hat es eine Gesamtlänge L_{R} im Bereich von 80 mm ≤ L_{R} ≤ 2000 mm; bevorzugt 160 mm ≤ L_{R} ≤ 2000 mm.

Der Einschraubraum 42 zwischen den Innengewinden 34,38 hat vorzugsweise eine Länge L_{E} im Bereich von 40 mm ≤ L_{E} ≤ 1980 mm; vorzugsweise von 120 mm ≤ L_{E} ≤ 1980 mm.

Zudem gilt bevorzugt für das zweiseitige Gewinderohr 30 folgende Verhältnisgleichung der Länge L_{R} des Gewinderohrs 30 zum maximalen Nenndurchmesser Dₙ der Innengewinde 34,38: 8 ≤ L_{R}/Dₙ ≤ 250, bevorzugt 16 ≤ L_{R}/Dₙ ≤ 250.

Bezogen auf die Länge L_{E} des Einschraubraums 42 gilt entsprechend: 4 ≤ L_{F}/Dₙ ≤ 248; bevorzugt 8 ≤ L_{E}/Dₙ ≤ 248.

Eine weitere bevorzugte Ausführungsform des einseitigen Gewinderohrs 30" ist in Figur 13 c dargestellt. Benachbart zur zweiten Rohröffnung 36 ist ein radial einwärts ragender umlaufender Kragen 80 im Rohrinneren angeordnet. Dieser definiert eine zentrale Öffnung, die koaxial zur Längsachse des Gewinderohrs 30" angeordnet ist. Im Inneren des Gewinderohrs 30" ist ein Gewindebolzen 82 mit einem Kopf 84 und einem Gewindeschaft 86 angeordnet. Während sich der Kopf 84 auf dem Kragen 80 drehbar abstützt, durchläuft der Gewindeschaft 86 die zentrale Öffnung und ragt durch die zweite Rohröffnung 36, um dort eine Gewindeverbindung mit einem passenden Mutterngewinde herstellen zu können. Der Kopf 84 hat vorzugsweise ein Antriebsmittel 88, sodass er mit einem Werkzeug durch die erste Rohröffnung 32 drehbar ist. Mithilfe der Anordnung gemäß Figur 13 c wäre eine Schelle als Haltekonstruktion 60 mit dem Gewindebolzen 30" verbindbar, in dem der Gewindeschaft 86 in einem Aufnahmegewinde 90 in Kombination mit der Schelle befestigt wird, wie es Figur 5 bevorzugt zeigt.

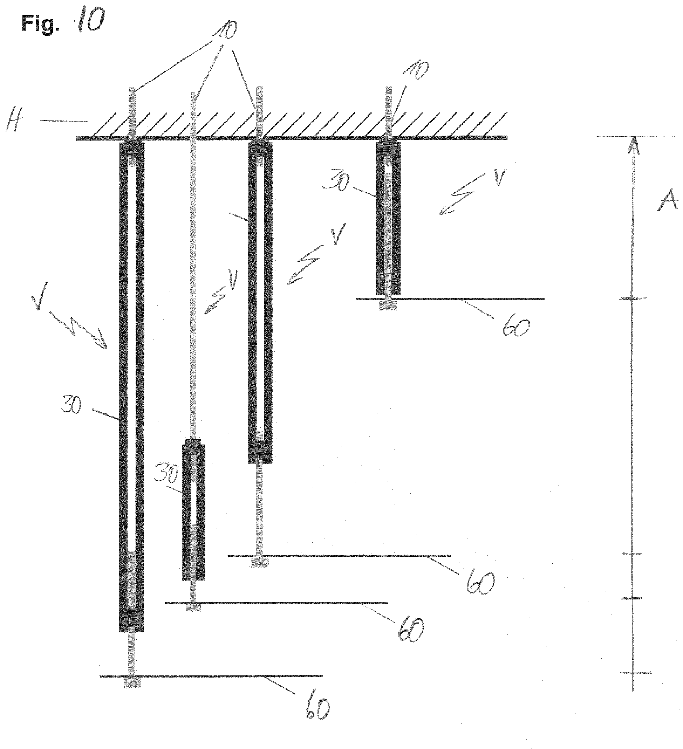

Figur 10 zeigt ebenfalls bevorzugte Konfigurationen des vertikalen Befestigungssystems V, mit denen unterschiedliche Vertikalabstände A zwischen der Horizontalkonstruktion H und der Haltekonstruktion 60 realisierbar sind.

### 6, Bezugszeichenliste

- H: Horizontalkonstruktion
- V: Vertikalbefestigung
- K: Kanal
- A: Vertikalabstand zwischen Horizontalkonstruktion H und Kanal K
- R_{V}: Verstellrichtung der Länge der Vertikalbefestigung V / des Abstands A zwischen Horizontalkonstruktion H und Kanal K
- O: Bohrung
- D: Dübel
- L_{E}: Länge des Einschraubraums
- L_{R}: Länge des Gewinderohrs
- 10: Vertikalanker
- 12: Befestigungsende des Vertikalankers
- 14: Gewindeanschluss
- 30: Gewinderohr
- 32: erste Rohröffnung
- 34: erstes Innengewinde
- 36: zweite Rohröffnung
- 38: zweites Innengewinde
- 40: Mantelfläche
- 42: Einschraubraum
- 44: erster Gewindeeinsatz
- 46: zweiter Gewindeeinsatz
- 48: geschnittenes Innengewinde im Gewinderohr
- 49: Drahtgewindeeinsatz
- 50: Haltebolzen
- 52: Kopf
- 54: Schaft
- 56: Außengewinde
- 60: Haltekonstruktion
- 62: Öffnung
- 70: Zwischenelement
- 80: Kragen
- 82: Gewindebolzen
- 84: Kopf
- 86: Gewindeschaft
- 88: Antriebsmittel

## Patentansprüche

1. Ein Befestigungsverfahren eines Kanals (K) zur Führung eines Mediums oder von Leitungen mithilfe einer anpassbaren Vertikalbefestigung (V), die mindestens aufweist:
a. einen Vertikalanker (10) mit einem Befestigungsende (12) und einem Gewindeanschluss (14),
b. ein Gewinderohr (30) mit einander gegenüberliegend einem ersten (34) und einem zweiten Innengewinde (38) gleicher Gangrichtung angeordnet benachbart zu einer ersten (32) und einer zweiten Rohröffnung (36), dessen erstes Innengewinde (34) auf den Gewindeanschluss (14) des Vertikalankers (10) passt und dessen erstes (34) und dessen zweites Innengewinde (38) über einen Aufnahmeraum (42) voneinander beabstandet sind,
c. einen Haltebolzen (50) mit einem freien Gewindeende (54) und einem Kopfende (52), dessen Gewindeende (54) in das zweite Innengewinde (38) des Gewinderohrs (30) passt und dessen Kopfende (52) mit einer Haltekonstruktion (60) des Kanals (K) verbindbar oder verbunden ist, wobei
das Befestigungsverfahren die folgenden Schritte aufweist:
S1. Befestigen des obersten Vertikalankers (10) mit dem Befestigungsende (12) in einer tragenden Horizontalkonstruktion (H), insbesondere eine Decken- oder Balkenkonstruktion,
S2. Verbinden des Gewindeanschlusses (14) des Vertikalankers (10) mit dem ersten Innengewinde (34) des Gewinderohrs (30),
S3. Einschrauben des freien Gewindeendes (54) des Haltebolzens (50) in das zweite Innengewinde (38) des Gewinderohrs (30), sodass die Haltekonstruktion (60) des Kanals (K) über das Gewinderohr (30) mit dem Vertikalanker (10) verbunden ist.

2. Das Befestigungsverfahren gemäß Patentanspruch 1 mit dem weiteren Schritt:
S4. Verkleinern oder Vergrößern eines Vertikalabstands (A) zwischen der Haltekonstruktion (60) und der tragenden Horizontalkonstruktion (H) durch Einschrauben oder Ausschrauben des Gewindeendes (54) des Haltebolzens (50) und/oder des Gewindeanschlusses (14) des Vertikalankers (10) in oder aus dem Aufnahmeraum (42) des Gewinderohrs.

3. Das Befestigungsverfahren gemäß Patentanspruch 1 oder Patentanspruch 2 mit dem weiteren Schritt:
Bereitstellen des Gewinderohrs (30) als ein Rohr mit einem Innengewindeende (34) und einem freien Rohrende (36),
Ablängen des Gewinderohrs (30) an dem freien Rohrende (36) auf eine definierte Länge und
Vorsehen eines zweiten Innengewindes (38) in dem freien Rohrende (36) gegenüberliegend zu dem vorhandenen Innengewindeende (34).

4. Das Befestigungsverfahren gemäß Patentanspruch 3 mit dem weiteren Schritt:
Einpressen eines Gewindeeinsatzes (46) in das freie Rohrende (36') oder
Befestigen einer Blindnietmutter in dem freien Rohrende (36') oder
Schneiden eines Innengewindes (48) und Einsetzen eines Drahtgewindeeinsatzes (49) darin in dem freien Rohrende (36') oder
Einsetzen eines Drahtgewindeeinsatzes (49) in ein vorhandenes Innengewinde 48.

5. Das Befestigungsverfahren gemäß einem der vorhergehenden Patentansprüche, in dem der Vertikalanker (10)
a. eine Stockschraube ist, die in die Horizontalkonstruktion (H) eingeschraubt wird, oder
b. ein Schussbolzen ist, der in die Horizontalkonstruktion (H) eingeschossen wird, oder
c. ein Schwerlastanker ist, der in der Horizontalkonstruktion (H) befestigt wird, oder
d. eine Gewindestange mit Dübelende ist, die in der Horizontalkonstruktion (H) verschraubt wird.

6. Ein zweiseitiges Gewinderohr (30) zur beidseitigen Befestigung jeweils eines Bolzens mit Außengewinde, welches die folgenden Merkmale aufweist:
a. ein Rohr (30) mit einander gegenüberliegend einer ersten (32) und einer zweiten Öffnung (36), ein erstes Innengewinde (34), das benachbart zur ersten Öffnung (32) angeordnet ist und eine erste Gangrichtung aufweist, und ein zweites Innengewinde (38), das benachbart zur zweiten Öffnung (36) angeordnet ist und eine zweite Gangrichtung aufweist, deren erste und zweite Gangrichtungen gleich sind,
c. ein Einschraubraum (42), der zwischen dem ersten (34) und dem zweiten Innengewinde (38) angeordnet ist und einen freien Innendurchmesser (dᵢ) aufweist, der größer oder gleich einem größeren Nenndurchmesser D_{N} des ersten (34) und zweiten Innengewindes (38) ist,
d. das erste (34) und das zweite Innengewinde (38) sind
i. ein benachbart zur ersten (32) und/oder zweiten Öffnung (36) befestigter Gewindeeinsatz (44, 46) oder
ii. eine benachbart zur ersten (32) und/oder zweiten Öffnung (36) befestigte Blindnietmutter oder
iii. ein benachbart zur ersten (32) und/oder zweiten Öffnung (36) geschnittenes Innengewinde (48) in dem Rohr (30), mit einem darin angeordneten Drahtgewindeeinsatz (49) oder
iv. eine Kombination der Alternativen i. bis iii.

7. Das zweiseitige Gewinderohr (30) gemäß Patentanspruch 6, in dem das erste (34) und/oder das zweite Gewinde (38) eine Gewindesicherung aufweist, insbesondere eine verjüngte Windung in dem Drahtgewindeeinsatz (49) oder einen Steigungsverzug in dem Gewindeeinsatz (44, 46) oder einen Sicherungsklebstoff.

8. Das zweiseitige Gewinderohr (30) gemäß Patentanspruch 6 oder 7, welches eine radial auswärts vollständig geschlossen umlaufende Mantelfläche (40) aufweist, die die Innengewinde (34, 38) und den Einschraubraum (40) umgibt.

9. Das zweiseitige Gewinderohr (30) gemäß Patentanspruch 8, welches eine runde oder eine mehreckige Umfangsgestalt aufweist.

10. Das zweiseitige Gewinderohr (30) gemäß einem der Patentansprüche 6 bis 9, dessen Einschraubraum (40) an einer radialen Innenseite gewindelos, insbesondere vollständig eben und weiter bevorzugt durchgängig mit konstantem Innendurchmesser dᵢ, ausgebildet ist.

11. Ein einseitiges Gewinderohr (30') zur beidseitigen Befestigung eines Bolzens mit Außengewinde oder zur Befestigung eines Bolzens mit Außengewinde und eines Elements mit Innengewinde, welches die folgenden Merkmale aufweist:
a. ein Rohr (30') mit einander gegenüberliegend einer ersten (32) und einer zweiten Öffnung (36),
b. ein erstes Innengewinde (34), das benachbart zur ersten Öffnung (32) angeordnet ist und eine erste Gangrichtung aufweist,
c. ein Einschraubraum (40), der zwischen dem ersten Innengewinde (34) und der zweiten Öffnung (36) angeordnet ist und einen freien Innendurchmesser (dᵢ) aufweist, der größer oder gleich einem Nenndurchmesser (D_{N}) des ersten Innengewindes (34) ist,
d. das erste Innengewinde (34) ist:
i. ein benachbart zur ersten Öffnung (32) befestigter Gewindeeinsatz 44 oder
ii. eine benachbart zur ersten Öffnung (32) befestigte Blindnietmutter oder
iii. ein benachbart zur ersten Öffnung (32) geschnittenes Innengewinde (48) in dem Rohr (30') mit einem darin angeordneten Drahtgewindeeinsatz (49),
wobei das Gewinderohr (30') benachbart zur zweiten Öffnung (36) angepasst ist, um zur Befestigung eines Bolzens mit Außengewinde einen Gewindeeinsatz (46), eine Blindnietmutter oder ein Gewinde (48) in Kombination mit einem Drahtgewindeeinsatz (49) vorzusehen oder um zur Befestigung eines Elements mit Innengewinde einen drehbar oder fest angeordneten Gewindebolzen (82) vorzusehen.

12. Das einseitige Gewinderohr (30') gemäß Patentanspruch 11, in dem das erste Gewinde (34) eine Gewindesicherung aufweist, insbesondere eine verjüngte Windung in dem Drahtgewindeeinsatz (49) oder einen Steigungsverzug in dem Gewindeeinsatz (46) oder einen Sicherungskleber.

13. Das einseitige Gewinderohr (30') gemäß Patentanspruch 11 oder 12, welches eine radial auswärts vollständig geschlossen umlaufende Mantelfläche 40 aufweist, die die Innengewinde (34) und den Einschraubraum (42) umgibt.

14. Das einseitige Gewinderohr (30') gemäß Patentanspruch 13, welches eine runde oder eine mehreckige Umfangsgestalt aufweist.

15. Das einseitige Gewinderohr (30') gemäß einem der Patentansprüche 11 bis 14, dessen Einschraubraum (42) an einer radialen Innenseite gewindelos, insbesondere vollständig eben und weiter bevorzugt durchgängig mit konstantem Innendurchmesser dᵢ, ausgebildet ist.

16. Das einseitige Gewinderohr (30') gemäß einem der Patentansprüche 11 bis 15, in dessen zweiter Öffnung (36) der fest angeordnete Gewindebolzen ein Blindnietbolzen oder eine befestigte Schraube ist oder der drehbar angeordnete Gewindebolzen (82) eine Schraube mit Schraubenkopf (84) ist, der an einem rohrinneren radial einwärts ragenden Kragen 80 benachbart zur zweiten Öffnung (36) drehbar abgestützt ist.

17. Einen Satz von Gewinderohren (30, 30') unterschiedlicher Länge gemäß einem der Patentansprüche 6 bis 16.

18. Ein Herstellungsverfahren eines einseitigen (30') oder eines zweiseitigen Gewinderohrs (30) gemäß einem der Patentansprüche 6 bis 16, welches die folgenden Schritte aufweist:
a. Bereitstellen eines geradlinigen Rohrs (30) mit einer ersten (32) und einer zweiten Öffnung (36) und einer definierten Länge,
b. Befestigen eines Gewindeeinsatzes (44, 46) benachbart zur ersten und/oder zweiten Öffnung oder
c. Schneiden eines Innengewindes (48) in eine Rohrwand des Gewinderohrs (30) benachbart zur ersten (32) und/oder zweiten Öffnung (36) und Einsetzen eines Drahtgewindeeinsatzes (49) in das geschnittene Gewinde (48) oder
d. Einsetzen eines Drahtgewindeeinsatzes (49) benachbart zur ersten (32) und/oder zweiten Öffnung (36) in ein im Gewinderohr (30) vorhandenes Innengewinde (48) oder
e. eine Kombination der Schritte b. bis d. zur Erzeugung unterschiedlicher Konfigurationen benachbart zu der ersten (32) und der zweiten Öffnung (36).

19. Das Herstellungsverfahren gemäß Patentanspruch 18, in dem der Gewindeeinsatz (44, 46) eingepresst oder eingeklebt oder eingeschweißt wird.

20. Eine Vertikalbefestigung (V) eines Kanals (K) zur Führung eines Mediums oder von Leitungen, die folgende Merkmale aufweist:
einen Vertikalanker (10) mit einem Gewindeanschluss (14),
ein Gewinderohr (30, 30') gemäß einem der Patentansprüche 6 bis 16,
einen Haltebolzen (50) in Kombination mit einer Haltetraverse (60) als Auflage für einen Kanal (K) oder einer Halteschelle für einen runden Kanal, wobei ein Außengewinde (56) des Haltebolzens (50) passend zu einem Innengewinde (38) des Gewinderohrs (30) ausgebildet ist oder
eine Halteschelle für einen runden Kanal mit einem Mutterngewinde, welches passend zu einem Außengewinde eines Gewindebolzens in der zweiten Öffnung des Gewinderohr ausgebildet ist.

21. Die Vertikalbefestigung (V) gemäß Patentanspruch 20, in der der Vertikalanker (10) ein Schwerlastanker oder eine Stockschraube oder ein Schussbolzen mit Gewindeanschluss oder eine Gewindestange mit Dübelende ist.
